# EUROPÄISCHE PATENTSCHRIFT

(11) **EP 2 543 614 B1**
(45) Veröffentlichungstag und Bekanntmachung des Hinweises auf die Patenterteilung: **06.08.2014**
(21) Anmeldenummer: 12173712.6
(22) Anmeldetag: 27.06.2012
(51) Int. Cl.: B65G 47/88, B65G 1/08, B65G 1/02

(54) **Durchlaufregal mit Steuerfahne**
Live storage rack with control flag
Etagère traversante dotée d'un fanion de commande

(30) Priorität: 04.07.2011 DE 102011078600
(43) Veröffentlichungstag der Anmeldung: 09.01.2013
(73) Patentinhaber: BITO-Lagertechnik Bittmann GmbH, 55590 Meisenheim (DE)
(72) Erfinder: Gassner, Okten, 55571 Odernheim (DE); Neu, Sascha, 66885 Altenglan (DE)
(74) Vertreter: Richardt Patentanwälte PartG mbB

(56) Entgegenhaltungen:
- DE-A1- 4 309 222
- DE-A1- 4 413 475
- DE-C1- 3 243 086
- ES-A1- 2 323 105
- US-A- 5 213 189

## Beschreibung

Die Erfindung betrifft ein Durchlaufregal mit Separiervorrichtung zur Separierung von einer Aufgabeseite zu einer Entnahmeseite hinbeförderten Ladungsträgern.

Bei mit Schwerkraft betriebenen Durchlaufregalen für Ladungsträger, wie z. B. Paletten oder Behälter, steht an dem ersten Ladungsträger, der sich auf der Entnahmeseite befindet, der größte Druck an. Je länger die Durchlaufbahn des Durchlaufregals ist, desto höher ist dieser Druck. Aufgrund dieses hohen Staudrucks lässt sich der vorderste Ladungsträger an der Entnahmeseite nicht ohne Probleme entnehmen. Es kommt oft zu Beschädigungen an dem Ladungsträger und/oder Lagergut.

Um eine solche Beschädigung zu vermeiden, ist aus der EP 0 842 874 A2 eine Separiervorrichtung bekannt, die eine erste vorderste Palette von einer nachfolgenden zweiten Palette separiert. Wenn sich die erste Palette in Förderrichtung zur Entnahmeseite des Durchlaufregals bewegt, verschwenkt sie eine angrenzend an die Entnahmeseite vorgesehene Steuerfahne aus einer ersten Stellung, in der sie sich über die Förderebene hinaus erstreckt, in eine zweite Stellung, in der sie in der Förderebene liegt. Die Steuerfahne ist über eine Betätigungsgestange so mit einer in Förderrichtung stromaufwärts angeordneten Anschlageinrichtung verbunden, dass die Anschlageinrichtung bei der genannten Bewegung aus einer Freigabestellung, in der sie sich unterhalb der Förderebene befindet, in eine Anschlagstellung bewegt wird, in der sie sich über die Förderebene hinaus erstreckt. An dieser Anschlageinrichtung schlägt die nachfolgende zweite Palette an. Sobald die erste Palette von dem Durchlaufregal entnommen wird, wird die Steuerfahneneinrichtung durch eine Vorspanneinrichtung wieder in die erste Stellung bewegt. Gleichzeitig wird die Anschlageinrichtung über die Betätigungsgestang aus der Anschlagstellung in die Freigabestellung bewegt, so dass sich die zweite Palette zur Entnahmeseite hin bewegen kann. Diese Bewegung der Paletten ermöglicht es, dass die erste Palette ohne Staudruck von dem Durchlaufregal entnommen werden kann.

Weitere Durchlaufregale mit Separiervorrichtung sind aus der DE 203 131 94 U1, DE 196 368 42 A1, DE 324 30 86 C1, DE 103 03 508 B4, DE 43 09 222 A1, EP 0 968 938 B1, DE102006041826 A1 bekannt. Aus der EP 1 897 823 A2 ist ein Durchlaufregal mit einer Separiervorrichtung bekannt, bei dem eine Steuerfahne über eine Betätigungsstange mit einer Vereinzelungs-Anschlageinrichtung in Verbindung steht.

In der EP 2 354 046 A1 ist eine Weiterbildung eines solchen Durchlaufregals mit Separiervorrichtung offenbart.

Aus der ES 2 323 105 ist ein Durchlaufregal mit Separiervorrichtung gemäß dem Oberbegriff des Anspruchs 1 bekannt, bei dem zusätzlich zu einem Aktuator für eine Vereinzelungs-Anschlageinrichtung in der Ebene der Rollenbahn eine horizontal verschwenkbare Steuerfahne mit der Vereinzelungs-Anschlageinrichtung in Verbindung steht, sodass eine zweite Palette zurückgehalten wird, bis eine erste Palette nicht mehr auf die horizontal verschwenkbare Steuerfahne einwirkt.

Der Erfindung liegt demgegenüber die Aufgabe zugrunde, ein verbessertes Durchlaufregal mit Separiervorrichtung sowie ein Regalsystem zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen der Erfindung sind besonders vorteilhaft, da die Schwenkachse der Steuerfahne im Wesentlichen senkrecht zu der Förderebene verläuft, sodass die Steuerfahne in etwa parallel zu der Förderebene schwenkbar ist. Durch einen passierenden Ladungsträger wird also die Steuerfahne nicht nach unten gedrückt, wie sonst im Stand der Technik üblich, sondern seitlich weggeschwenkt. Dies hat den Vorteil, dass die Steuerfahne von dem passierenden Ladungsträger auch dann noch in der zweiten Stellung gehalten wird, wenn die vordere Begrenzung des Ladungsträgers das Anschlagelement schon längst passiert hat, solange die hintere Begrenzung des Ladungsträgers gerade noch im Bereich des äußersten Ende der Steuerfahne ist.

Wenn beispielsweise der betreffende Ladungsträger den Entnahmeanschlag des Durchlaufregals an der Entnahmeseite erreicht hat und von dort beispielsweise mit einem Gabelstapler entnommen werden soll, so hat dies verschiedene Vorteile:
Wenn der Ladungsträger durch den Gabelstapler zunächst leicht von der Förderebene abgehoben wird, so wird die Steuerfahne dennoch in ihrer zweiten Stellung gehalten, da sie oberhalb der Förderebene angeordnet ist. Die Vereinzelungsanschlageinrichtung verbleibt also in dem verriegelten Anschlagzustand, sodass der nachfolgende Ladungsträger noch an dem Anschlagelement der Vereinzelungsanschlageinrichtung verbleibt.

Dies hat den Vorteil, dass der nachfolgende zweite Ladungsträger nicht auf den ersten Ladungsträger, der gerade entnommen werden soll, während des Entnahmevorgangs trifft.

Ein weiterer wesentlichen Vorteil ergibt sich dann, wenn der Entnahmevorgang des ersten Ladungsträgers abgebrochen werden muss: Beispielsweise fährt der Gabelstapler ein Stück weit zurück, um den ersten Ladungsträger, nachdem er leicht von der Förderebene abgehoben wurde, rückwärts aus der Entnahmeseite zu entnehmen. Aufgrund der Überlappung der hinteren Begrenzung des ersten Ladungsträgers mit dem Ende der Steuerfahne verbleibt diese auch dann noch in ihrer zweiten Stellung, wenn der Gabelstapler bereits ein kleines Stück zurückgefahren ist. Wenn der Entnahmevorgang in diesem Status abgebrochen oder rückgängig gemacht werden soll, so ist dies ohne Weiteres möglich, da sich die Vereinzelungsanschlageinrichtung noch in dem verriegelten Anschlagzustand befindet. Der Gabelstapler kann also wieder ein Stück vorfahren, um beispielsweise einen hinterkreuzenden Gabelstapler passieren zu lassen, ohne dass es hierdurch zu Beschädigungen an den Ladungsträgern oder der Separiervorrichtung kommen kann.

Erfindungsgemäß erstreckt sich die Steuerfahne über zumindest die halbe Breite des Durchlaufregals, vorzugsweise über die gesamte Breite des Durchlaufregals, da auf diese Art und Weise der Überlappungsbereich zwischen dem hinteren Ende des Ladungsträgers und dem Ende der Steuerfahne während des Entnahmevorgangs maximiert wird.

Die Steuerfahne hat eine Länge von zumindest einer halben Länge des Aufnahmebereichs zwischen dem Entnahmeanschlag und dem Anschlagelement. Insbesondere kann die Steuerfahne eine Länge von 50 % bis 75 % der Länge des Aufnahmebereichs aufweisen. Dies ist besonders vorteilhaft, um einen sogenannten Mischbetrieb von Ladungsträgern unterschiedlicher Längen zu ermöglichen. Wenn beispielsweise zwei verschiedene Typen von Ladungsträgern zum Einsatz kommen, nämlich ein kurzer Ladungsträger und ein langer Ladungsträger, der die doppelte Länge wie ein kurzer Ladungsträger hat, und der Aufnahmebereich eine Länge aufweist, die zur Aufnahme eines der langen Ladungsträger ausreichend ist, so ermöglicht dies einen optimalen Mischbetrieb mit langen und kurzen Ladungsträgern, insbesondere dann, wenn die Steuerfahne mindestens die Länge eines kurzen Ladungsträgers aufweist, so dass die Steuerfahne auch dann in der zweiten Stellung gehalten wird, wenn sich in dem Aufnahmebereich nur ein kurzer Ladungsträger befindet.

Beispielsweise können als Ladungsträger kurze Europaletten einer Länge von 600 mm und lange Europaletten einer Länge von 1200 mm für einen Mischbetrieb des Durchlaufregals zum Einsatz kommen. Solche "langen Europaletten" werden üblicherweise als "Europaletten" bezeichnet und "kurze Europaletten" als "Düsseldorfer-Paletten". In diesem Fall hat der Aufnahmebereich vorzugsweise eine Länge von mindestens 1200 mm und die Länge der Steuerfahne beträgt mehr als die Länge einer Düsseldorfer-Palette, d.h. mehr als 600 mm, vorzugsweise 700 mm bis 750 mm, so dass der Überlappungsbereich zwischen der Steuerfahne und einer am Endanschlag befindlichen kurzen Europalette beispielsweise 100 mm bis 150 mm beträgt.

Die Steuerfahne ist elastisch verformbar, insbesondere aus einem elastisch verformbaren Kunststoff oder aus Gummi. Dies hat den Vorteil, dass ein weiterer Schutz gegen eine Beschädigung der Separiervorrichtung gegeben ist, auch dann, wenn es im Einzelfall doch dazu kommt, dass die ersten und zweiten Ladungsträger auf der Entnahmeseite aufeinanderprallen.

Nach einer Ausführungsform der Erfindung hat die Steuerfahne ein Dämpfungselement, um das Zurückschwenken der Steuerfahne aus der zweiten Stellung in die erste Stellung zu verlangsamen. Hiermit wird erreicht, dass nach Freigabe der Steuerfahne in der zweiten Stellung durch vollständige Entnahme des ersten Ladungsträgers der Übergang von dem verriegelten Anschlagzustand in den Freigabezustand mit leichter Verzögerung erfolgt, um zusätzlich sicherzustellen, dass der nachfolgende zweite Ladungsträger nach dem Passieren des Anschlagelements nicht auf die hintere Begrenzung des ersten Ladungsträgers treffen kann.

Nach einer Ausführungsform der Erfindung ist der Abstand zwischen dem Anschlagelement und dem Entnahmeanschlag größer oder gleich der Länge des längsten der ersten und zweiten Ladungsträger.

Nach einer Ausführungsform der Erfindung ist der Abstand zwischen dem Entnahmeanschlag und dem Anschlagelement nicht größer ist als die Summe der Länge des kürzesten der ersten und zweiten Ladungsträger und der Länge der Steuerfahne, sodass die Steuerfahne durch jeden der ersten und zweiten Ladungsträger in der zweiten Stellung gehalten wird, wenn der betreffende Ladungsträger an dem Entnahmeanschlag anliegt.

Nach Ausführungsformen der Erfindung hat die Vereinzelungsanschlageinrichtung einen Schnappriegelverschluss, in den ein Verriegelungsbolzen des Anschlagelements einrasten kann, so dass das Anschlagelement seinen verriegelten Anschlagzustand einnimmt. Beispielsweise befindet sich der Verriegelungsbolzen an der Unterseite des Anschlagelements und verläuft nach unten, zum Beispiel in vertikaler Richtung, so dass er in den Schnappriegelverschluss eingreift.

Nach einer Ausführungsform der Erfindung ist ein Betätigungshebel des Schnappriegelverschluss mit der Steuerfahne lose mechanisch gekoppelt, so dass entsprechend der Schwenkposition der Steuerfahne der Schnappriegelverschluss betätigt wird.

Ausführungsformen der Erfindung sind besonders vorteilhaft, da die sonst übliche direkte mechanische Kopplung der Vereinzelungsanschlageinrichtung und der Steuerfahne durch eine Bestätigungsstange vermieden werden kann. Eine solche direkte mechanische Kopplung hat nämlich den Nachteil, dass hierdurch nicht nur ein Kraftpfad zur Übertragung einer Betätigungskraft von der Steuerfahne auf die Vereinzelungsanschlageinrichtung ausgeübt wird, um den verriegelten Anschlagzustand bzw. den Freigabezustand festzulegen, sondern dass auch bei einem unsachgemäßen Betrieb des Durchlaufregals ein Kraftpfad dann gebildet wird, wenn beispielsweise das Anschlagelement in seinem Freigabezustand durch einen passierenden Ladungsträger weggeschwenkt wird und gleichzeitig eine Kraft auf die Steuerfahne ausgeübt wird, um den verriegelten Anschlagzustand einzustellen. Bei einem solchen unsachgemäßen Betrieb kann es zu einer schwerwiegenden Beschädigung der Separiervorrichtung kommen.

Hier wird nach Ausführungsformen der Erfindung Abhilfe geschaffen, indem prinzipbedingt ein Kraftpfad von der Steuerfahne zu dem Betätigungshebel der Vereinzelungsanschlageinrichtung nur durch eine lose mechanische Kopplung gebildet werden kann, um diesen in seiner Position zu steuern, nicht aber ein direkter Kraftpfad zwischen dem Anschlagelement der Vereinzelungsanschlageinrichtung und der Steuerfahne. Durch diese lose mechanische Kopplung zwischen der Steuerfahne und dem Arretierungselement werden Beschädigungen der Separiervorrichtung bei einem unsachgemäßen Betrieb des Durchlaufregals vermieden.

Unter einer "losen mechanischen Kopplung" wird hier jede Art der mechanischen Kopplungsmittel zwischen der Steuerfahne und der Vereinzelungsanschlageinrichtung verstanden, über die im Normalbetrieb der verriegelten Anschlagzustand bzw. der Freigabezustand einstellbar ist, und welche in einem Betriebszustand der Separiervorrichtung, in dem beispielsweise durch entsprechende Bewegung der Steuerfahne der verriegelten Anschlagzustand eingestellt werden soll, während ein Ladungsträger gerade die Separiervorrichtung passiert, kein Kraftpfad von der Steuerfahne zu der Vereinzelungsanschlageinrichtung gebildet wird, so dass eine Beschädigung der Mechanik vermieden wird.

Unter einer "Vereinzelungsanschlageinrichtung" werden hier insbesondere Mittel verstanden, die dazu ausgebildet sind, einen Anschlag mit einem Ladungsträger zu bilden, um diesen zu stoppen, wenn sich die Vereinzelungsanschlageinrichtung in dem verriegelten Anschlagzustand befindet, und die dazu ausgebildet sind, einen Ladungsträger passieren zu lassen, wenn sich die Vereinzelungsanschlageinrichtung in dem Freigabezustand befindet. Die Vereinzelungsanschlageinrichtung kann also zumindest zwei Betriebszustände einnehmen, nämlich den verriegelten Anschlagzustand und den Freigabezustand, sowie - je nach Ausführungsform - einen transienten Zustand beim Übergang zwischen dem Freigabezustand und dem verriegelten Anschlagzustand und zurück.

Ferner sind Ausführungsformen der Erfindung besonders vorteilhaft, da die lose mechanische Kopplung zwischen der Steuerfahne und der Vereinzelungsanschlageinrichtung, d.h. beispielsweise dem Anschlagelement, mit geringem konstruktivem Aufwand sowie nahezu verschleiß- und wartungsfrei realisierbar ist.

Unter einem "Schnappriegelverschluss" wird hier ein Verschluss mit einer Falle verstanden, in die z.B. ein Verriegelungsbolzen fallen kann, so dass er hierdurch arretiert wird. Die Falle des Schnappriegelverschluss kann durch Betätigung des Schnappriegelverschlusses zum Beispiel über einen Betätigungshebel gelöst werden, so dass die Arretierung des Verriegelungsbolzen aufgehoben wird. Wenn der Verriegelungsbolzen in den Schnappriegelverschluss eingreift, während der Verriegelungsverschluss zum Lösen der Falle betätigt ist, so wird der Verriegelungsbolzen nicht arretiert. Schnappriegelverschlüsse sind in verschiedenen Ausführungsformen an sich aus dem Stand der Technik bekannt, und werden zum Beispiel als Kofferraumverschluss oder Türverschluss bei Kraftfahrzeugen eingesetzt.

Im Weiteren werden Ausführungsformen der Erfindung mit Bezugnahme auf die Zeichnungen erläutert. Es zeigen:
- Figur 1: eine perspektivische Ansicht einer Ausführungsform eines erfindungsgemäßen Durchlaufregals, wobei sich die Steuerfahne in der ersten Stellung befindet,
- Figur 2: eine perspektivische Teilansicht einer Ausführungsform der Separiervorrichtung,
- Figur 3a: eine perspektivische Ansicht einer Ausführungsform eines erfindungsgemäßen Durchlaufregals, wobei sich die Steuerfahne in der ersten Stellung befindet,
- Figur 3b: eine Detailansicht der Betätigungsvorrichtung der Ausführungsform gemäß Figur 3a,
- Figur 3c: eine Detailansicht einer Vereinzelungsanschlageinrichtung der Ausführungsform gemäß Figuren 3a und 3b,
- Figur 4: eine perspektivische Ansicht einer Ausführungsform eines erfindungsgemäßen Durchlaufregals beim Passieren der Vereinzelungsanschlageinrichtung durch einen Ladungsträger,
- Figur 5: eine Detailansicht der Vereinzelungsanschlageinrichtung mit geöffnetem Schnappriegelverschluss,
- Figur 6: eine perspektivische Ansicht einer Ausführungsform eines erfindungsgemäßen Durchlaufregals mit einem Ladungsträger in dem Entnahmebereich und einem Ladungsträger an dem Anschlagelement,
- Figur 7: eine Ansicht gemäß Figur 5 bei geschlossenem Schnappriegelverschluss,
- Figur 8: eine perspektivische Teilansicht einer Ausführungsform eines erfindungsgemäßen Durchlaufregals mit einem mittig angeordneten Schnappriegelverschluss.
- Figur 9: eine schematische Draufsicht auf eine Ausführungsform des Durchlaufregals mit einem Ladungsträger auf der Entnahmeseite,
- Figur 10: die Ausführungsform des Durchlaufregals der Figur 9 während der Entnahme des Ladungsträgers,
- Figur 11: eine schematische Draufsicht auf eine Ausführungsform des Durchlaufregals bei entnahmeseitig aufeinanderstoßenden Ladungsträgern.

Im Weiteren werden einander entsprechende Elemente der verschiedenen Ausführungsformen jeweils mit gleichen Bezugszeichen gekennzeichnet.

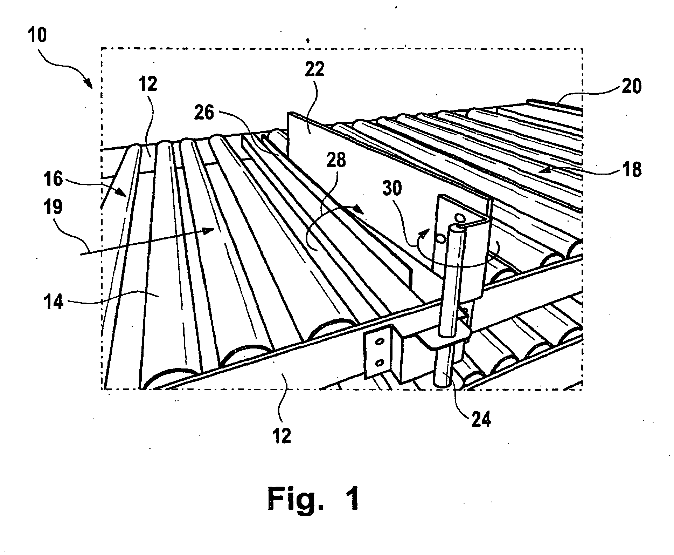

Die Figur 1 zeigt ein Durchlaufregal, welches hier aus einer Rollenbahn 10 besteht. Die Rollenbahn 10 wird durch einen Rahmen 12 gebildet, in dem mehrere Transportrollen 14 hintereinander angeordnet sind, um so eine Förderebene zu bilden, in der Ladungsträger (34, 60) von einer Aufgabeseite 16 zu einer Entnahmeseite 18 in Förderrichtung 19 gefördert werden können, bis ein Ladungsträger (34, 60) den Entnahmeanschlag 20 erreicht hat.

In der hier betrachteten Ausführungsform hat die Rollenbahn 10 ein leichtes Gefälle von der Aufgabeseite 16 zu der Entnahmeseite 18 hin, sodass die Ladungsträger (34, 60) aufgrund der Schwerkraft in die Förderrichtung 19 befördert werden.

An der Rollenbahn 10 ist eine Steuerfahne 22 befestigt, die sich in der hier betrachteten Ausführungsform von dem in Förderrichtung 19 linken Rand der Rollenbahn 10 bis etwa zur Mitte der Rollenbahn 10 erstreckt. In anderen Ausführungsformen kann sich die Steuerfahne 22 darüber hinaus zum Beispiel bis zum rechten Rand der Rollenbahn erstrecken.

Die Steuerfahne 22 ist um eine Schwenkachse 24 schwenkbar an dem Rahmen 12 gelagert, sodass die Steuerfahne 22 im Wesentlichen parallel zu der durch die Transportrollen 14 gebildeten Förderebene durch einen passierenden Ladungsträger (34, 60) verschwenkbar ist. Die Figur 1 zeigt die Steuerfahne 22 in ihrer ersten Stellung, wenn sie nicht durch einen passierenden Ladungsträger (34, 60) verschwenkt ist.

Unmittelbar vor der in Figur 1 gezeigten ersten Stellung der Steuerfahne 22 ist in Förderrichtung 19 ein Anschlagelement 26 einer Vereinzelungsanschlageinrichtung 36 angeordnet, welches sich in einem verriegelten Anschlagzustand oder einem Freigabezustand befinden kann. In dem Freigabezustand wird das Anschlagelement 26 durch die Vorderkante eines das Anschlagelement 26 passierenden Ladungsträgers (vgl. beispielsweise Ladungsträger 34 und 60, wie in einigen der nachfolgenden Figuren gezeigt) in Pfeilrichtung 28 weggeschwenkt, sodass der Ladungsträger (34, 60) auf die Steuerfahne 22 trifft und diese seitlich in Pfeilrichtung 30 wegschwenkt, wie in der Figur 1 gezeigt.

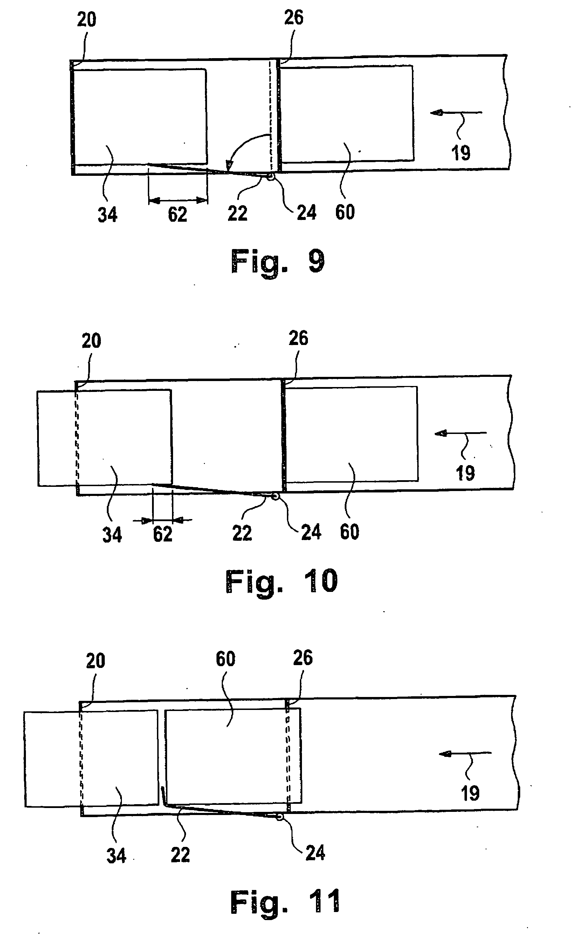

Befindet sich das Anschlagelement 26 dagegen in seinem verriegelten Anschlagzustand, so ist die Schwenkbewegung in Pfeilrichtung 28 blockiert, sodass ein mit seiner Vorderkante auf das Anschlagelement 26 auftreffender Ladungsträger (34, 60) durch das Anschlagelement 26 gestoppt wird, wie dies beispielsweise für den Ladungsträger 60 in Fig. 9 der Fall ist.

Zur Einstellung des verriegelten Anschlagzustands bzw. des Freigabezustands ist die Steuerfahne 22 mit dem Anschlagelement 26 der Vereinzelungsanschlageinrichtung (36) mechanisch lose gekoppelt, wie es im Weiteren näher erläutert wird.

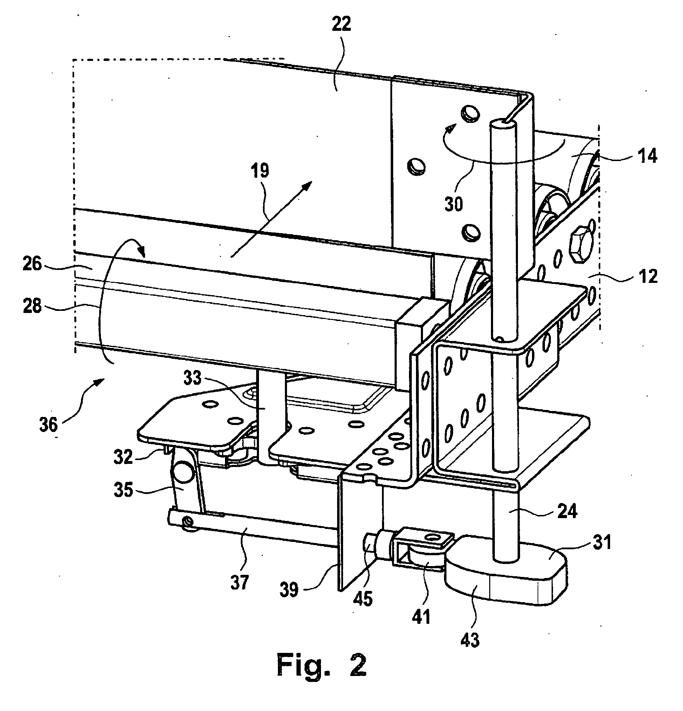

Die Figur 2 zeigt eine Teilansicht einer Ausführungsform der Separiervorrichtung im Freigabezustand. Am unteren Ende der Schwenkachse 24 ist bei der hier betrachteten Ausführungsform ein Steuerungselement 31 befestigt. Das Steuerungselement ist hier scheibenförmig ausgebildet und hat hier in etwa die Form eines Quaders mit abgerundeten Ecken. Es können auch andere geometrische Formen verwendet werden, die einen Rand haben, der in variierenden Abständen von der Schwenkachse verläuft, insbesondere ein Exzenter.

Die Vereinzelungsanschlageinrichtung 36 beinhaltet hier einen Schnappriegelverschluss 32, der an dem Rahmen 12 befestigt ist. An der Unterseite des Anschlagelements 26 ist ein Verriegelungsbolzen 33 befestigt, der hier im Wesentlichen vertikal nach unten verläuft. Der Verriegelungsbolzen 33 ist zum Eingriff in den Schnappriegelverschluss 32 ausgebildet, um dort einrasten zu können.

Der Schnappriegelverschluss 32 hat einen Betätigungshebel 35, an dem eine Betätigungsstange 37 mit ihrem ersten Ende angelenkt ist. Die Betätigungsstange 37 verläuft durch ein Führungsloch einer Halterung 39, welche an dem Rahmen 12 befestigt ist. An dem zweiten Ende der Betätigungsstange 37 ist ein Wälzkörper 41 angeordnet, der sich auf der Seitenfläche 43 des Steuerungselements 31 abwälzen kann, wenn das Steuerungselement 31 aufgrund einer Verschwenkung der Steuerfahne 22 gedreht wird.

Zwischen dem Ende der Betätigungsstange 37 und der Halterung 39 kann sich ein elastisches Element 45 befinden, welches den Wälzkörper 41 mit einer Vorspannung gegen die Seitenfläche 43 drückt. Alternativ oder zusätzlich kann diese Vorspannung von einem Federelement des Schnappriegelverschlusses 32 über den Betätigungshebel 35 auf den Wälzkörper 41 ausgeübt werden.

Aufgrund der Formgebung des Steuerungselements 31 mit zwei ungefähr parallelen langen und zwei ungefähr parallelen kurzen Seiten wird die Betätigungsstange 37 in der in Figur 2 gezeigten Position der Steuerfahne 22, das heißt wenn diese ihre erste Stellung einnimmt, entgegen der Rückstellkraft des elastischen Elements 45 bzw. des Betätigungshebels 35 in die Halterung 39 hineingedrückt, so dass der Schnappriegelverschluss 32 über den Betätigungshebel 35 betätigt wird und daher die Falle des Schnappriegelverschluss 32 nicht zufällt, obwohl der Verriegelungsbolzen 33 in den Schnappriegelverschluss 32 eingreift.

Das Anschlagelement 26 befindet sich infolgedessen in seinem Freigabezustand, da das Anschlagelement 26 durch einen passierenden Ladungsträger in Pfeilrichtung 28 verschwenkt werden kann.

Durch einen passierenden Ladungsträger (34, 60) wird die Steuerfahne 22 in Pfeilrichtung 30 verschwenkt, so dass das Steuerungselement 31 um die Achse 24 gedreht wird. Aufgrund dessen wälzt sich der Wälzkörper 41 auf der Seitenfläche 43 des Steuerungselements 31 ab und erreicht so die lange Seite der Seitenfläche 43, so dass die Betätigungsstange 37 aufgrund der Rückstellkraft ein Stück weit aus der Halterung 39 in Richtung auf das Steuerungselement 31 herausfährt. Dabei wird der Betätigungshebel 35 verschwenkt. Wenn nun das Anschlagelement 26 zurückschwingt, nachdem der Ladungsträger (34, 60) das Anschlagelement 26 passiert hat und die Steuerfahne 22 in deren zweiten Stellung hält, so fällt der Verriegelungsbolzen 33 in die Falle des Schnappriegelverschluss 32 und wird dort eingerastet, so dass das Anschlagelement 26 seinen verriegelten Anschlagzustand einnimmt.

Als Alternative zu der Ausführungsform gemäß Figur 2 kann das Steuerungselement 31 als Exzenterscheibe ausgebildet sein, welche exzentrisch an der Schwenkachse 24 angeordnet ist.

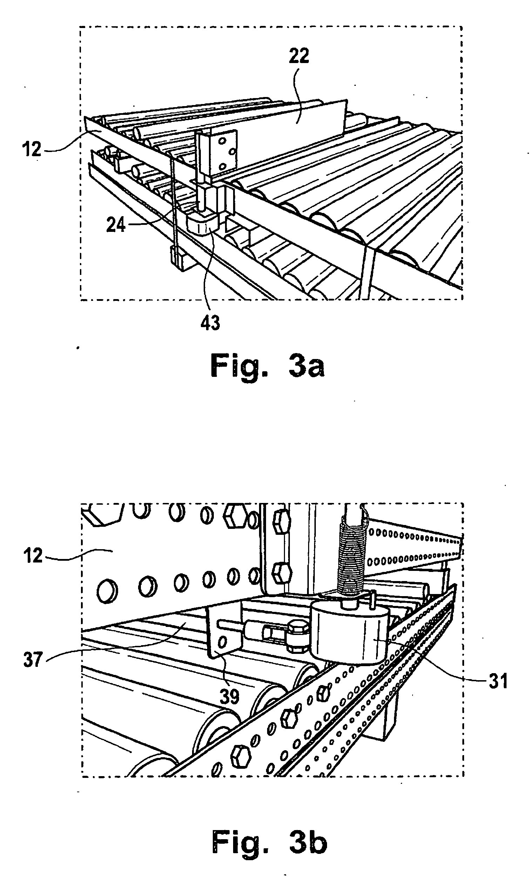

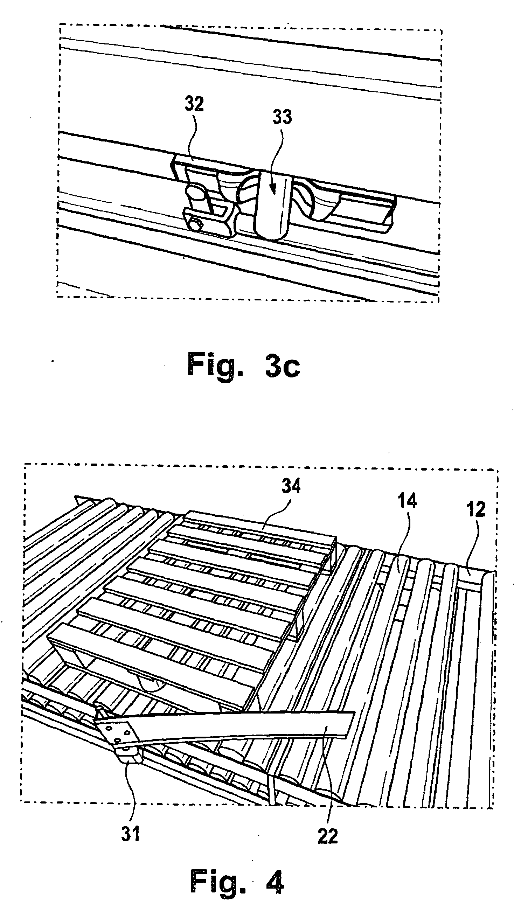

Die Figur 3a zeigt die Steuerfahne 22 in deren Ruhelage, das heißt in der ersten Stellung. In dieser Position wird die Betätigungsstange 37 von dem Steuerungselement 31 in die Halterung 39 hineingedrückt, wie in der Fig. 3b gezeigt, so dass der Schnappriegelverschluss 32 betätigt wird, so wie es in der Figur 2 dargestellt ist. Aufgrund dieser Betätigung kann der Verriegelungsbolzen 33 nicht einrasten, wie in der Figur 3c gezeigt. Dies ist analog zu dem Schnappriegelverschluss einer PKW-Tür, welcher beim Schließen der PKW-Tür bei gleichzeitigem Halten des Türgriffs nicht verrastet.

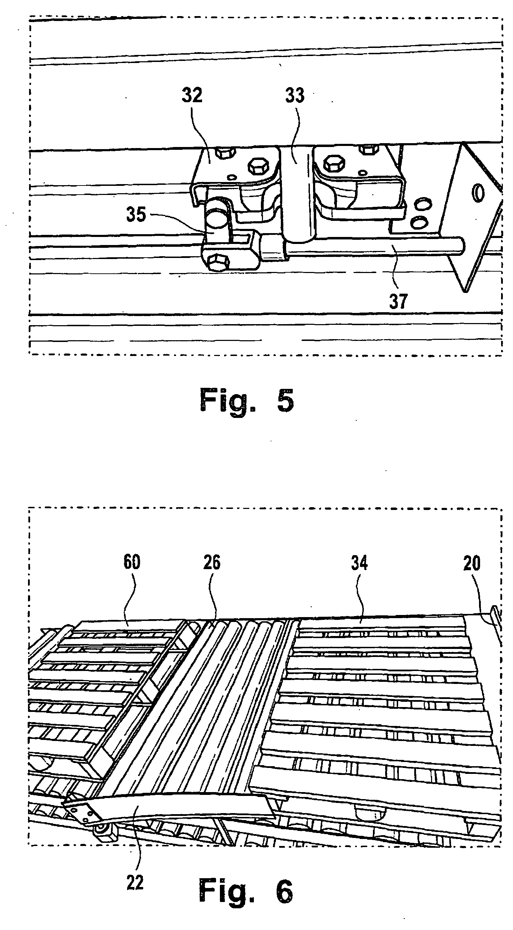

Die Figur 4 zeigt die Rollenbahn 10 zu einem Zeitpunkt, zu dem ein Ladungsträger 34 das Anschlagelement 26 passiert und die Steuerfahne 22 aus ihrer ersten in die zweite Stellung verschwenkt. In dieser Position ist der Verriegelungsbolzen 33 aufgrund der Verschwenkung des Anschlagelements 26 aus dem Schnappriegelverschluss 32 herausgeschwenkt, wie in der Figur 5 dargestellt.

Die Figur 6 zeigt die Rollenbahn 10, nachdem der Ladungsträger 34 das Anschlagelement 26 vollständig passiert hat und den Entnahmebereich der Rollenbahn, das heißt das Anschlagelement 26 erreicht hat. In dieser Position hält der Ladungsträger 34 die Steuerfahne 22 in der ersten Stellung, so dass das Anschlagelement 26 aufgrund des Einrastens des Verriegelungsbolzens 33 in dem Schnappriegelverschluss 32 seinen verriegelten Anschlagzustand einnimmt. Ein nachfolgender weiterer Ladungsträger 60 wird daher von dem Anschlagelement 26 gestoppt.

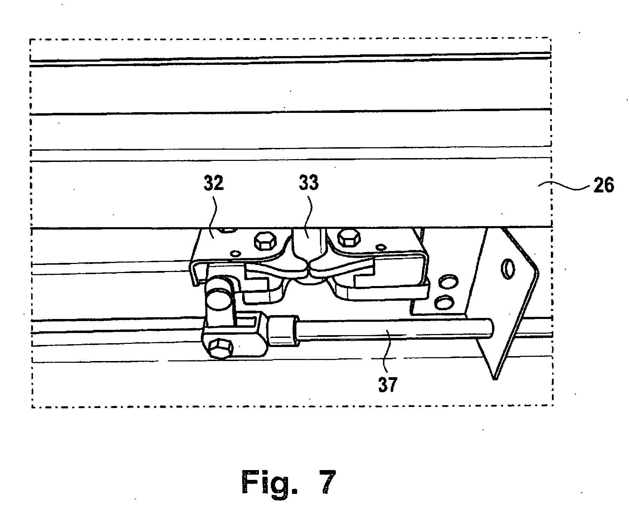

Die Verriegelung des Verriegelungsbolzens 33 in dem Schnappriegelverschluss 32, nachdem der Ladungsträger 34 das Anschlagelement 26 passiert hat, ist in der Figur 7 dargestellt.

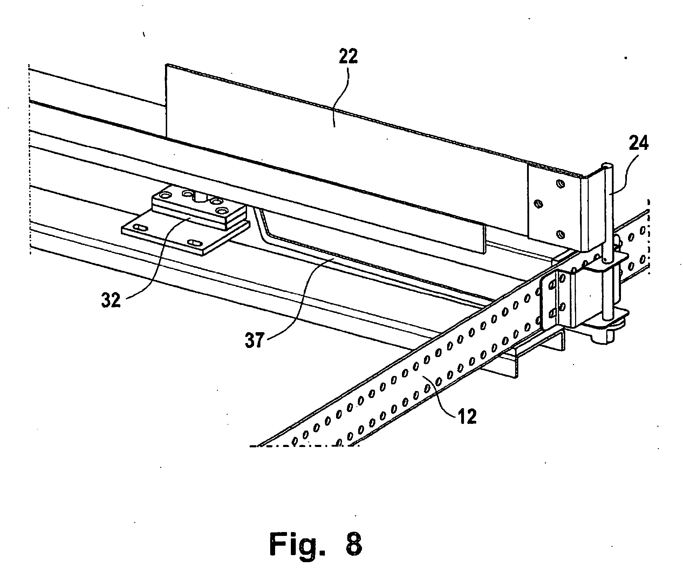

Die Figur 8 zeigt eine alternative Ausführungsform, bei der der Schnappriegelverschluss 32 in etwa mittig an einer Quertraverse der Rollenbahn 10 befestigt ist.

Die Figur 9 zeigt in schematischer Draufsicht eine Ausführungsform des erfindungsgemäßen Durchlaufregals im Betrieb. In dem gezeigten Zustand hat ein erster Ladungsträger 34 die Steuerfahne 22, die hier die gesamte Breite der Rollenbahn 10 überspannt, aus der ersten Stellung in die zweite Stellung verschwenkt und den Entnahmeanschlag 20 erreicht. In dieser Position hält der Ladungsträger 34 die Steuerfahne 22 also durch den Überlappungsbereich 62 in ihrer zweiten Position, sodass der verriegelte Anschlagzustand, wie in der Figur 5 dargestellt, eingestellt ist. Ein nachfolgender Ladungsträger 60 wird daher durch das Anschlagelement 26 gestoppt.

Der Ladungsträger 34 wird dann zum Beispiel durch einen Gabelstapler oder robotisch von der Förderebene abgehoben und dann über den Entnahmeanschlag 20 von dem Durchlaufregal entnommen, wie in der Figur 10 dargestellt. Dabei gibt der Ladungsträger 34 aufgrund seiner Längenerstreckung nicht sofort die Steuerfahne 22 frei; es verkürzt sich dabei zunächst nur der Überlappungsbereich 62 zwischen dem hinteren Ende der Ladungsträgers 34 und dem äußeren Ende der Steuerfahne 22 , die zweite Stellung der Steuerfahne 22 wird aber beibehalten. Dies hat den Vorteil, dass in der in der Figur 10 gezeigten Entnahmeposition des Ladungsträgers 34 dieser wieder entgegen der Förderrichtung 19 in die Entnahmeseite 18 zurückverfahren werden kann, beispielsweise um einen anderen Gabelstapler passieren zu lassen. Bei einem solchen Abbruch des Entnähmevorgangs in der in Figur 10 gezeigten Position ist ferner vorteilhaft, dass der Ladungsträger 60 zunächst an dem Anschlagelement 26 verbleibt, sodass er nicht auf den vorderen Ladungsträger 34 auftreffen kann.

Die Figur 11 zeigt eine Ausführungsform des Durchlaufregals mit der erfindungsgemäßen elastischen Steuerfahne 22. In dem in der Figur 11 gezeigten Betriebszustand wurde der Ladungsträger 34 bereits teilweise aus der Entnahmeseite 18 entnommen, und zwar so weit, dass die Steuerfahne 22 bereits freigegeben worden ist und ein Stück weit in Richtung auf ihre erste Stellung zurückgeschwenkt ist. Dadurch wurde der Freigabezustand eingestellt, sodass der Ladungsträger 60 das Anschlagelement 26 passiert hat und dann in Richtung auf die Entnahmeseite 18 in Förderrichtung 19 bewegt worden ist. Da aber der Entnahmevorgang für den Ladungsträger 34 unterbrochen worden ist, trifft der Ladungsträger 60 nicht auf den Entnahmeanschlag 20, sondern auf die hintere Begrenzung des Ladungsträgers 34, wobei das äußere Ende der Steuerfahne 22 zwischen der hinteren Begrenzung des Ladungsträgers 34 und der vorderen Begrenzung des Ladungsträgers 60 eingeklemmt und elastisch deformiert wird.

Wenn anschließenden der Entnahmevorgang für den Ladungsträger 34 wieder aufgenommen wird und dieser vollständig aus der Entnahmeseite 18 entnommen worden ist, so bewegt sich der Ladungsträger 60 bis zu dem Entnahmeanschlag 20 und die Steuerfahne 20 geht in ihren unverformten Zustand über, ohne dass es zu einer Beschädigung der Separiervorrichtung oder einer Betriebsstörung gekommen ist.

Ein weiterer Vorteil ergibt sich in einer Situation, wo zum Beispiel der Ladungsträger 34 bereits so weit aus der Entnahmeseite 18 entnommen worden ist, dass die Steuerfahne 22 beginnt zurückzuschwenken. Wenn dann der Gabelstapler entgegen der Förderrichtung 19 den Ladungsträger 34 wieder zurückfährt, wird hierdurch eine Kraft auf die Rückseite der Steuerfahne 22 ausgeübt, die aber aufgrund der losen mechanischen Kopplung zu der Vereinzelungsanschlageinrichtung 36 nicht zu einer Beschädigung der Separiervorrichtung führen kann, da es keinen entsprechenden Kraftpfad hierfür gibt.

Das Durchlaufregal kann für einen Mischbetrieb mit kurzen und langen Ladungsträgern (34, 60) ausgebildet sein. Beispielsweise kann es sich bei dem Ladungsträger 34 um eine kurze Europalette mit einer Länge von 600 mm und bei dem Ladungsträger 60 um eine lange Europalette der doppelten Länge, das heißt, eine Länge von 1200 mm handeln. Der Aufnahmebereich der Separiervorrichtung, das heißt, der Abstand zwischen dem Entnahmeanschlag 20 und dem Anschlagelement 26, hat dann mindestens die Länge des langen Ladungsträgers 60, so dass dieser nach dem Passieren des Anschlagelements 26 dort aufgenommen werden kann. Vorzugsweise hat die Steuerfahne 22 eine Länge, die etwas größer ist als die Länge eines kurzen Ladungsträgers 34, beispielsweise eine Länge von 700 mm bis 750 mm, was einen Überlappungsbereich 62 (vergleiche Figuren 9 und 10) von 100 mm bis 150 mm ergibt. Unabhängig davon, ob sich ein kurzer Ladungsträger 34 oder ein langer Ladungsträger 60 in dem Aufnahmebereich befindet, wird also die Steuerfahne 22 in ihrer zweiten Stellung gehalten, was den Mischbetrieb ermöglicht.

### Bezugszeichenliste

- 10: Rollenbahn
- 12: Rahmen
- 14: Transportrollen
- 16: Aufgabeseite
- 18: Entnahmeseite
- 19: Förderrichtung
- 20: Entnahmeanschlag
- 22: Steuerfahne
- 24: Schwenkachse
- 26: Anschlagelement
- 28: Pfeilrichtung
- 30: Pfeilrichtung
- 31: Steuerungselement
- 32: Schnappriegelverschluss
- 33: Verriegelungsbolzen
- 34: Ladungsträger
- 35: Betätigungshebel
- 36: Vereinzelungsanschlageinrichtung
- 37: Betätigungsstange
- 38: Achse
- 39: Halterung
- 41: Wälzkörper
- 43: Seitenfläche
- 45: elastisches Element
- 60: Ladungsträger
- 62: Überlappungsbereich

## Patentansprüche

1. Durchlaufregal mit Separiervorrichtung zur Separierung von von einer Aufgabeseite (16) zu einer Entnahmeseite (18) hin beförderten Ladungsträgern (34, 60) mit
- einer Steuerfahne (22), die durch einen sich in Förderrichtung (19) bewegenden Ladungsträger (34, 60) aus einer ersten Stellung in eine zweite Stellung verschwenkbar ist,
- einer in der Förderrichtung (19) stromaufwärts vor der Steuerfahne (22) angeordneten Vereinzelungsanschlageinrichtung (36) mit einem Anschlagelement (26), wobei die Vereinzelungsanschlageinrichtung (36) mit der Steuerfahne (22) mechanisch so gekoppelt ist, dass sich das Anschlagelement (26) in einem verriegelten Anschlagzustand befindet, in dem es sich über die Förderebene hinaus erstreckt, wenn sich die Steuerfahne (22) in der zweiten Stellung befindet, nachdem einer der Ladungsträger (34, 60) die Vereinzelungsanschlageinrichtung (36) passiert hat und die Steuerfahne (22) in der zweiten Stellung hält, und sich das Anschlagelement (26) in einem Freigabezustand befindet, in dem es sich unter die Förderebene bewegen kann, wenn sich die Steuerfahne (22) in der ersten Stellung befindet, wobei die Schwenkachse (24) der Steuerfahne (22) senkrecht zu der Förderebene verläuft,
**dadurch gekennzeichnet, dass** sich die Steuerfahne (22) über zumindest die halbe Breite des Durchlaufregals erstreckt, wenn sich die Steuerfahne (22) in ihrer ersten Stellung befindet und wobei die Steuerfahne (22) elastisch verformbar ist.

2. Durchlaufregal nach Anspruch 1, wobei sich die Steuerfahne (22) über die gesamte Breite des Durchlaufregals erstreckt, wenn sich die Steuerfahne (22) in ihrer ersten Stellung befindet.

3. Durchlaufregal nach Anspruch 1 oder 2, wobei die Steuerfahne (22) aus einem elastisch verformbaren Kunststoff besteht.

4. Durchlaufregal nach einem der vorhergehenden Ansprüche, mit einem Dämpfungselement zur Dämpfung der Rückstellung der Steuerfahne (22) von der zweiten Stellung in die erste Stellung.

5. Durchlaufregal nach einem der vorhergehenden Ansprüche, mit einem Entnahmeanschlag (20) an der Entnahmeseite (18), und zumindest ersten und zweiten der Ladungsträgern (34, 60), wobei der Abstand zwischen dem Anschlagelement (26) und dem Entnahmeanschlag (20) größer oder gleich der Länge des längsten der ersten und zweiten Ladungsträger (34,60) ist.

6. Durchlaufregal nach Anspruch 5, wobei der Abstand zwischen dem Entnahmeanschlag (20) und dem Anschlagelement (26) nicht größer ist als die Summe der Länge des kürzesten der ersten und zweiten Ladungsträger (34,60) und der Länge der Steuerfahne (22) ist, sodass die Steuerfahne (22) durch jeden der ersten und zweiten Ladungsträger (34,60) in der zweiten Stellung gehalten werden kann, wenn der betreffende Ladungsträger (34,60) an dem Entnahmeanschlag (20) anliegt.

7. Durchlaufregal nach Anspruch 5 oder 6, wobei die Länge der Steuerfahne (22) mindestens die halbe Länge des Abstandes zwischen dem Anschlagelement (26) und dem Entnahmeanschlag (20) beträgt, , wobei die Länge der Steuerfahne (22) mindestens 600 mm beträgt.

8. Durchlaufregal nach Anspruch 5 oder 6, wobei die Länge der Steuerfahne (22) zwischen 50% und 75% der Länge des Abstandes zwischen dem Anschlagelement (26) und dem Entnahmeanschlag (20) beträgt.

9. Durchlaufregal nach Anspruch 5 oder 6, wobei die Länge der Steuerfahne (22) zwischen 600 mm und 750 mm beträgt.

10. Durchlaufregal nach einem der vorhergehenden Ansprüche, wobei das Arretierungselement als Schnappriegelverschluss (32) ausgebildet ist, mit einem an dem Anschlagelement (26) befestigten Verriegelungsbolzen (33), welcher zum Einrasten in den Schnappriegelverschluss (32) ausgebildet ist um das Anschlagelement (26) in dem verriegelten Anschlagzustand zu halten, und mit einer Betätigungsvorrichtung (37, 41, 45) für den Schnappriegelverschluss (32), welcher mit der Steuerfahne (22) mechanisch so gekoppelt ist, dass der Schnappriegelverschluss (32) in der zweiten Stellung der Steuerfahne (22) in einem geschlossenen Zustand gehalten wird.

11. Durchlaufregal nach Anspruch 10, wobei die Betätigungsvorrichtung eine Betätigungsstange (37) aufweist, deren Ende mit einer Vorspannung über ein Wälzkörper (41) auf ein Steuerungselement (31) gedrückt wird, und deren anderes Ende an einem Betätigungshebel (35) des Schnappriegelverschluss (32) angelenkt ist, wobei das Steuerungselement (31) mit der Schwenkachse (24) der Steuerfahne (22) verbunden ist, so dass bei einer Schwenkung der Steuerfahne (22) aus der ersten Stellung in die zweite Stellung der Betätigungshebel (35) aufgrund der Abwälzung des Wälzkörper (41) über eine Seitenfläche (43) des Steuerungselements (31) durch die Betätigungsstange (37) so betätigt wird, dass der Verriegelungsbolzen (33) in dem Schnappriegelverschlusses (32) einrasten kann.

12. Regalsystem mit einem Durchlaufregal nach einem der vorhergehenden Ansprüche 4 bis 11 und mit ersten und zweiten Ladungsträgern (34, 60), wobei die zweiten Ladungsträger (34, 60) in Förderrichtung die doppelte Länge haben wie die ersten Ladungsträger (34, 60), und wobei ein Aufnahmebereich des Durchlaufregals zwischen dem Anschlagelement (26) und dem Entnahmeanschlag (20) zur Aufnahme von zwei in Förderrichtung (19) hintereinander befindlichen der ersten Ladungsträger (34, 60) oder eines der zweiten Ladungsträger (34, 60) ausgebildet ist.

13. Regalsystem nach Anspruch 12, wobei die Steuerfahne (22) zwischen 50% und 75% der Länge eines zweiten Ladungsträgers (60) aufweist.

## Claims

1. A feed rack with separating device for separating load carriers (34, 60) conveyed from an input side (16) to a removal side (18), comprising
- a control lug (22), which is pivotable from a first position into a second position by means of a load carrier (34, 60) moving in the conveying direction (19),
- a separating stop device (36) arranged upstream of the control lug (22) in the conveying direction (19) and comprising a stop element (26), wherein the separating stop device (36) is mechanically coupled to the control lug (22) such that the stop element (26) is in a locked stop state, in which it extends beyond the conveying plane, when the control lug (22) is in the second position once one of the load carriers (34, 60) has passed the separating stop device (36) and holds the control lug (22) in the second position, and the stop element (26) is in a release state, in which it can move beneath the conveying plane, when the control lug (22) is in the first position, wherein the pivot pin (24) of the control lug (22) runs perpendicularly to the conveying plane,
**characterised in that** the control lug (22) extends over at least half the width of the feed rack when the control lug (22) is in its first position, and wherein the control lug (22) is resiliently deformable.

2. The feed rack according to Claim 1, wherein the control lug (22) extends over the entire width of the feed rack when the control lug (22) is in its first position.

3. The feed rack according to Claim 1 or 2, wherein the control lug (22) consists of a resiliently deformable plastic.

4. The feed rack according to one of the preceding claims, comprising a damping element for damping the return of the control lug (22) from the second position into the first position.

5. The feed rack according to one of the preceding claims, comprising a removal stop (20) on the removal side (18) and at least first and second load carriers (34, 60), wherein the distance between the stop element (26) and the removal stop (20) is greater than or equal to the length of the longest of the first and second load carriers (34, 60).

6. The feed rack according to Claim 5, wherein the distance between the removal stop (20) and the stop element (26) is not greater than the sum of the length of the shortest of the first and second charge carriers (34, 60) and the length of the control lug (22), such that the control lug (22) can be held in the second position by any of the first and second load carriers (34, 60) when the load carrier in question (34, 60) rests against the removal stop (20).

7. The feed rack according to Claim 5 or 6, wherein the length of the control lug (22) is at least half the length of the distance between the stop element (26) and the removal stop (20), wherein the length of the control lug (22) is at least 600 mm.

8. The feed rack according to Claim 5 or 6, wherein the length of the control lug (22) is between 50% and 75% of the length of the distance between the stop element (26) and the removal stop (20).

9. The feed rack according to Claim 5 or 6, wherein the length of the control lug (22) is between 600 mm and 750 mm.

10. The feed rack according to one of the preceding claims, wherein the locking element is formed as a latch closure (32), comprising a locking pin (33), which is secured to the stop element (26) and which is configured to latch into the latch closure (32) in order to hold the stop element (26) in the locked stop state,
and comprising an actuation device (37, 41, 45) for the latch closure (32), which is mechanically coupled to the control lug (22) such that the latch closure (32) is held in a closed state in the second position of the control lug (22).

11. The feed rack according to Claim 10, wherein the actuation device has an actuation rod (37), the end of which is pressed with a pretension via a roll body (41) onto a control element (31), and the other end of which is hinged to an actuation lever (35) of the latch closure (32), wherein the control element (31) is connected to the pivot pin (24) of the control lug (22), such that, when the control lug (22) pivots from the first position into the second position, the actuation lever (35) is actuated by the actuation rod (37) on account of the rolling of the roll body (41) over a side surface (43) of the control element (31), such that the locking pin (33) can latch in the latch closure (32).

12. A rack system comprising a feed rack according to one of preceding claims 4 to 1 and comprising first and second load carriers (34, 60), wherein the second load carriers (34, 60) have twice the length of the first load carriers (34, 60) in the conveying direction, and wherein a receiving region of the feed rack is formed between the stop element (26) and the removal stop (20) for receiving two of the first load carriers (34, 60), located successively in the conveying direction (19), or one of the second load carriers (34, 60).

13. The rack system according to Claim 12, wherein the control lug (22) has between 50 % and 75 % of the length of a second load carrier (60).

## Revendications

1. Étagère traversante avec un dispositif de séparation pour la séparation de supports de charge (34, 60) transportés d'un côté alimentation (16) vers un côté collecte (18), avec
- un drapeau de commande (22) pivotant d'une première position vers une deuxième position lors du déplacement d'un support de charge (34, 60) dans la direction de transport (19),
- un moyen de butée de séparation (36) agencé en amont du drapeau de commande (22) dans la direction de transport (19) avec un élément de butée (26), le moyen de butée de séparation (36) étant accouplé mécaniquement avec le drapeau de commande (22) de manière à ce que l'élément de butée (26) se trouve dans un état de butée verrouillé, dans lequel il s'étend au-delà du plan de transport, lorsque le drapeau de commande (22) se trouve dans la deuxième position, une fois que l'un des supports de charge (34, 60) a dépassé le moyen de butée de séparation (36) et maintient le drapeau de commande (22) dans la deuxième position, et de manière à ce que l'élément de butée (26) se trouve dans un état de libération, dans lequel il peut se déplacer sous le plan de transport, lorsque le drapeau de commande (22) se trouve dans la première position dans laquelle l'axe de pivotement (24) du drapeau de commande (22) s'étend perpendiculairement au plan de transport,
**caractérisée en ce que** le drapeau de commande (22) s'étend au moins sur à moitié de la largeur de l'étagère traversante lorsque le drapeau de commande (22) se trouve dans sa première position, et dans laquelle le drapeau de commande (22) est élastiquement déformable.

2. Étagère traversante selon la revendication 1, dans laquelle le drapeau de commande (22) s'étend sur toute la largeur de l'étagère traversante lorsque le drapeau de commande (22) se trouve dans sa première position.

3. Étagère traversante selon la revendication 1 ou 2, dans laquelle le drapeau de commande (22) est constitué d'une matière plastique élastiquement déformable.

4. Étagère traversante selon l'une des revendications précédentes, avec un élément d'amortissement pour amortir le retour du drapeau de commande (22) de la deuxième position vers la première position.

5. Étagère traversante selon l'une des revendications précédentes, avec une butée de collecte (20) du côté collecte (18) et au moins des premier et deuxième supports de charge (34, 60), dans laquelle l'espacement entre l'élément de butée (26) et la butée de collecte (20) est supérieur ou égal à la longueur du plus long parmi les premier et deuxième supports de charge (34, 60).

6. Étagère traversante selon la revendication 5, dans laquelle l'espacement entre la butée de collecte (20) et l'élément de butée (26) n'est pas plus grand que la somme de la longueur du plus court parmi le premier et le deuxième support de charge (34, 60) et la longueur du drapeau de commande (22), de sorte que le drapeau de commande (22) peut être maintenu dans la deuxième position par chacun parmi le premier et le deuxième support de charge (34, 60) lorsque le support de charge (34, 60) concerné touche la butée de collecte (20).

7. Étagère traversante selon la revendication 5 ou 6, dans laquelle la longueur du drapeau de commande (22) mesure au moins la moitié de la longueur de l'espacement entre l'élément de butée (26) et la butée de collecte (20), la longueur du drapeau de commande (22) mesurant au moins 600 mm.

8. Étagère traversante selon la revendication 5 ou 6, dans laquelle la longueur du drapeau de commande (22) mesure entre 50% et 75% de la longueur de l'espacement entre l'élément de butée (26) et la butée de collecte (20).

9. Étagère traversante selon la revendication 5 ou 6, dans laquelle la longueur du drapeau de commande (22) mesure entre 600 mm et 750 mm.

10. Étagère traversante selon l'une des revendications précédentes, dans laquelle l'élément d'arrêt est conçu comme une fermeture à loquet encliquetable (32), avec un boulon de verrouillage (33) fixé à l'élément de butée (26), lequel est conçu pour s'encliqueter dans à fermeture à loquet encliquetable (32) pour maintenir l'élément de butée (26) dans l'état de butée verrouillé, et avec un dispositif d'actionnement (37, 41, 45) pour la fermeture à loquet encliquetable (32), lequel est accouplé mécaniquement au drapeau de commande (22) de manière à ce que dans un état fermé, la fermeture à loquet encliquetable (32) soit maintenue dans la deuxième position du drapeau de commande (22).

11. Étagère traversante selon la revendication 10, dans laquelle le dispositif d'actionnement comporte une tige d'actionnement (37) dont l'extrémité est appuyée avec précontrainte sur un élément de commande (31) par le biais d'un rouleau (41), et dont l'autre extrémité est articulée sur un levier d'actionnement (35) de la fermeture à loquet encliquetable (32), l'élément de commande (31) étant relié à l'axe de pivotement (24) du drapeau de commande (22) de manière à ce que lors d'un pivotement du drapeau de commande (22) hors de la première position vers la deuxième position, le levier d'actionnement (35) est actionné de telle façon par la tige d'actionnement (37) en raison du roulement du rouleau (41) sur une face latérale (43) de l'élément de commande (31), que le boulon de verrouillage (33) peut s'encliqueter dans la fermeture à loquet encliquetable (32).

12. Système d'étagère avec une étagère traversante selon l'une des revendications précédentes 4 à 11, et avec des premiers et deuxièmes supports de charge (34, 60), dans lequel les deuxièmes supports de charge (34, 60) présente une longueur deux fois plus grande que les premiers supports de charge (34, 60) dans la direction de transport, et dans lequel une région d'admission de l'étagère traversante entre l'élément de butée (26) et la butée de collecte (20) est conçue pour recevoir deux des premiers supports de charge (34, 60) disposés l'un à la suite de l'autre dans la direction de transport (19), ou l'un des deuxièmes supports de charge (34, 60).

13. Système d'étagère selon la revendication 12, dans lequel le drapeau de commande (22) présente une longueur mesurant entre 50% et 75% de la longueur d'un deuxième support de charge (60).
